# EUROPÄISCHE PATENTSCHRIFT

(11) **EP 0 486 895 B1**
(45) Veröffentlichungstag und Bekanntmachung des Hinweises auf die Patenterteilung: **24.01.1996**
(21) Anmeldenummer: 91119039.5
(22) Anmeldetag: 08.11.1991
(51) Int. Cl.: A47B 57/04

(54) **Variierbares Montageregal**
Mountable and variable shelf rack
Etagère montable et variable

(30) Priorität: 22.11.1990 DE 9015885 U
(43) Veröffentlichungstag der Anmeldung: 27.05.1992
(73) Patentinhaber: Fritz Schäfer Gesellschaft mit beschränkter Haftung, D-57290 Neunkirchen (DE)
(72) Erfinder: Schäfer, Gerhard, Dipl.-Ing., W-5908 Neunkirchen (DE)
(74) Vertreter: Müller, Gerd

(56) Entgegenhaltungen:
- EP-A- 0 154 704
- WO-A-90/09125
- CH-A- 493 231
- US-A- 1 711 329
- US-A- 4 972 783

## Beschreibung

Die Erfindung betrifft ein variierbares Montageregal mit den im Oberbegriff des Anspruchs 1 angegebenen Merkmalen.

Aus der WO-A-9 009 125 ist ein Montageregal mit diesen Merkmalen bekannt. Zur Schaffung eines kombinierten Vorrats- oder Bereitstell- bzw. Dispositionsregals relativ großer Bautiefe weist das Regal der vorliegenden Erfindung die Merkmale des kennzeichnenden Teils des Anspruchs 1 auf.

Bei solchen in Hintereinanderanordnung vorgesehenen Regal-Grundfeldern sind dann verschiedene Aufbaumöglichkeiten gegeben. So können neuerungsgemäß sämtliche Fachböden beider Regal-Grundfelder horizontal ausgerichtet sein und dabei jeweils Zweifachböden auf gleicher Ebene hintereinander liegen, und zwar derart, daß dabei die einander zugewendeten Längskanten zweier benachbarter Fachböden ausschließlich in ihrem Endbereich auf den Fachbodenträgern ruhen. Es wird hierdurch ein Vorratsregal relativ großer Bautiefe geschaffen.

Es können aber auch sämtliche Fachböden des einen Regal-Grundfeldes horizontale Ausrichtung haben, während sämtliche Fachböden des zweiten Regal-Grundfeldes eine Neigungslage einnehmen, und zwar hier in der Weise, daß die eine Längskante der geneigten Fachböden auf gleicher Ebene mit der Längskante des benachbarten, horizontalen Fachbodens liegt und dabei die einander zugewendeten Längskanten der beiden benachbarten Fachböden ausschließlich in ihrem Endbereich auf den Fachbodenträgern ruhen. Es ergibt sich hierdurch ein kombiniertes Vorrats- und Bereitstell-bzw. Dispositionsregal. Ein Bereitstell- bzw. Dispositionsregal großer Bautiefe läßt sich in neuerungsgemäßer Ausgestaltung dadurch schaffen, daß sämtliche Fachböden beider Regal-Anbaufelder mit Neigungslage eingebaut sind und sich jeweils zweifach Böden auf gleicher Ebene aneinander anschließen und daß dabei die einander zugewendeten Längskanten beider benachbarter Fachböden ausschließlich in Ihrem Endbereich auf den Fachbodenträgern ruhen, wobei jedem Fachbodenträger im Bereich der unteren Längskante des höher gelegenen Fachbodens ein Unterfütterungsadapter zugeordnet ist. Es wird hierdurch sichergestellt, daß beide hintereinander gelegenen Fachböden im Bereich der Fachbodenträger dauerhaft sicher auf gleicher Ebene abgestützt sind.

Ein besonders wesentliches Neuerungsmerkmal wird auch darin gesehen, daß die Pfosten der Rahmen aus im Querschnitt annähernd etwa W-förmigen Hohlprofilen bestehen, die sowohl in beiden äußeren W-Profilschenkeln als auch im Scheitelbereich zwischen den beiden inneren W-Profilschenkeln jeweils mindestens eine Reihe von in Längsrichtung gleichmäßig verteilt angeordneten Einhängerasten aufweisen, während in deren offene Profilseite die Enden der Tiefenstreben hineinragen, welche an den äußeren W-Profilschenkeln verankert bzw. verankerbar sind, daß die Einhängerasten im Scheitelbereich der inneren W-Profilschenkel jedes Pfostens Kupplungseingriffe für an den Enden der Längstraversen und/oder Anschlagtraversen vorgesehene Kupplungsschuhe bilden, welche einen äußeren W-Profilschenkel und einen inneren W-Profilschenkel des Pfosten- bzw. Hohlprofilquerschnitts angepaßt umfassen, während sie mit Kupplungshaken in die Kupplungseingriffe einrückbar sind und daß die Einhängerasten an den äußeren W-Profilschenkeln des Pfosten- bzw. Hohlprofilquerschnitts als Kupplungseingriffe für Rastzungen an den Fachbodenträgern und/oder an Pfostenverbindern vorgesehen sind.

Durch diese Neuerungsmaßnahmen wird nicht nur erreicht, daß sich Längstraversen und/oder Anschlagtraversen, Fachböden und Fachbodenträger in vielen unterschiedlichen Höhenlagen horizontal zwischen den Seitenrahmen einbauen lassen, sondern es ist darüberhinaus für den in Querrichtung geneigten Einbau der Fachböden auch möglich, innerhalb gewisser Grenzen unterschiedliche Neigungswinkel einzustellen, wobei diese unterschiedlichen Neigungswinkel durch den Rasterabstand zwischen den Kupplungseingriffen den Pfosten bestimmt sind.

Ein anderes wichtiges Neuerungsmerkmal wird auch darin gesehen, daß die freien Enden der beiden äußeren W-Profilschenkel der Pfosten jeweils mit einem einwärts gekröpften Winkelabschnitt versehen sind, daß die Endflansche beider Winkelabschnitte auf einer Ebene liegen, die etwa mittig zwischen je einem äußeren und einem inneren W-Profilschenkel verläuft, daß sowohl der Profilraum zwischen einem äußeren W-Profilschenkel und einem innerem W-Profilschenkel als auch der Profilraum zwischen den beiden inneren W-Profilschenkeln etwa trapezförmig begrenzt ist, und daß die Endflansche beider Winkelabschnitte mit Befestigungseingriffen, z. B. Löchern, für die Tiefenstreben und/oder Diagonalstreben der Seitenrahmen versehen sind.

Die vorstehend angegebene Profilgestaltung der einen wesentlichen Teil der Seitenrahmen bildenden Pfosten ergibt nicht nur eine hohe Stabilität der Seitenrahmen selbst, sondern sie stellt auch sicher, daß mit den Rastausnehmungen diesen Pfosten alle zugehörigen Verbindungsteile auch dort behinderungsfrei in Eingriff gebracht werden können, wo eine Verbindung zwischen den Pfosten und den Tiefenstreben und/oder Diagonalstreben vorhanden ist.

In weiterer Ausgestaltung der Neuerung ist auch vorgesehen, daß mit den im Scheitelbereich der inneren W-Profilschenkel jedes Pfostens vorgesehenen Einhängerasten gleichzeitig die Kupplungshaken der Kupplungsschuhe zweier nach entgegengesetzten Seiten gerichteter Längstraversen und/oder Anschlagetraversen in Eingriff bringbar sind, und daß dabei die zweite Gruppe von Längstraversen und/oder Anschlagtraversen zusammen mit einem weiteren Seitenrahmen ein Regal-Anbaufeld bildet, durch welches sich ein Regal-Anbaufeld - bei Bedarf - in seiner Baulänge vergrößern läßt.

Es hat sich nach der Neuerung auch bewährt, wenn die Längstraversen und/oder Anschlagtraversen aus starr zwischen zwei zueinander spiegelbildlich angeordneten und ausgebildeten Kupplungsschuhen sitzenden Profilschienen bestehen, die entweder einen etwa L-förmigen Querschnitt oder etwa den Querschnitt eines kopfstehenden J aufweisen.

Neuerungsgemäß ist auch vorgesehen, daß die Fachböden unterseitig an ihren Längs- und Querkanten jeweils mit durch Abkantungen gebildeten Versteifungsprofilen versehen sind, daß diese Versteifungsprofile an den Längskanten aus mehreren rohrartig geschlossenen und im Abstand zueinander parallel verlaufenden Profilabschnitten bestehen, deren Abstandsbereich eine abgestufte Gestaltung hat, und daß der abgestufte Abstandsbereich einen Halteeingriff für die Profilschienen der Längstraversen und/oder Anschlagtraversen sowie für an den Fachbodenträgern vorgesehene Fixierzähne oder -zungen bildet. Besonders die durch diese Ausgestaltung gegebene Möglichkeit einer teilweisen Integration der Längstraversen und/oder Anschlagtraversen in die Fachböden wird die Längsstabilität der letzteren beträchtlich erhöht.

Nach einer neuerungsgemäßen Ausgestaltungsmaßnahme können die Fachbodenträger oben an einer die Rastzungen tragenden Kupplungsplatte mit zwei abgewinkelten und dachartig gegeneinander geneigten Stützflächen für die Fachböden versehen werden, wobei von den Endkanten dieser Stützflansche jeweils wieder die Fixierzähne oder -zungen nach aufwärts gerichtet sind, während zwischen der Kupplungsplatte und den Stützflanschen jeweils Stabilisierungssicken ausgeformt sind.

Die bereits weiter oben erwähnten Unterfütterungsadapter lassen sich vorzugsweise durch Fixierzungen auf den Stützflanschen der Fachbodenträger verankern und/oder ausrichten.

Es besteht neuerungsgemäß auch die Möglichkeit, mit den Querkanten der Fachbödenbordwände lösbar zu kuppeln, wenn verhindert werden soll oder muß, daß auf den Fachböden befindliche Güter seitwärts bis in den Bereich der Pfosten verrutschen. Bewährt hat es sich dabei, wenn die Bordwände einerseits über den unteren Teil ihrer Höhe an der Außenseite der Querkanten-Versteifungsprofile des Fachbodens anliegen, während sie andererseits mit aus ihrer Ebene verkröpften Zungen von oben her in Schlitze eingreifen, die randnah in der Fachboden-Oberseite vorgesehen sind.

Zumindest für die an der Endnahmeseite des Regals liegend einzubauenden Längstraversen und/oder Anschlagtraversen kann es sich neuerungsgemäß als vorteilhaft erweisen, wenn sie eine Bauhöhe ihrer Profilschiene aufweisen, die die Bauhöhe der Fachböden überschreitet. Die auf den Fachböden ruhenden Güter werden auf diese Art und Weise daran gehindert, daß sie sich ohne weiteres zur Entnahmeseite hin über den Fachbodenrand hinausschieben lassen. Das Entnehmen dieser Güter vom betreffenden Fachboden zur Entnahmeseite hin ist vielmehr lediglich dann möglich, wenn diese Güter zuvor über die erhöhte Profilschiene hinweg angehoben werden.

Beschrieben wird dagegen statt der Neuerung nachfolgend an in der Zeichnung dargestellten Ausführungsbeispielen. Hierbei zeigen
- Figur 1: in räumlicher Ansichtsdarstellung, ein Montageregal, das aus einem hinteren und einem vorderen Regal-Grundfeld besteht und bei welchem die Fachböden im hinteren Regal-Grundfeld und im vorderen Regal-Grundfeld unterschiedliche Einbaulage haben,
- Figur 2: das Regal nach Figur 1 in der Seitenansicht, wobei hierin für die Fachböden der beiden hintereinanderstehenden Regal-Grundfelder nicht nur die Anordnung nach Figur 1 sondern durch strichpunktierte Linien und gestrichelte Linien noch zwei weitere Anordnungsmöglichkeiten angedeutet sind,
- Figur 3: in größerem Maßstab eine Stirnansicht in Pfeilrichting III der Figur 2 auf einen Pfosten eines Seitenrahmens des Regals,
- Figur 4: eine Ansicht in Pfeilrichtung IV der Figur 3,
- Figur 5: eine Ansicht in Pfeilrichtung V der Figur 4,
- Figur 6: eine Draufsicht auf eine Längstraverse für das Montageregal nach Figur 1 in größerem Maßstab,
- Figur 7: eine Draufsicht auf eine Anschlagtraverse für das Montageregal nach Figur 1 in größerem Maßstab,
- Figur 8: einen Schnitt entlang der Linie VIII-VIII in Figur 6
- Figur 9: einen Schnitt entlang der Linie IX-IX in Figur 7,
- Figur 10: in räumlicher Sprengdarstellung ein Teilstück eines zu einem Seitenrahmen gehörenden Regalpfostens sowie ein Teilstück einer mit diesem Regalpfosten kuppelbaren Längs- bzw. Anschlagtraverse mit Kupplungsschuh,
- Figur 11: in schematisch vereinfachter Draufsichtdarstellung einen Fachboden für das Montageregal nach den Figuren 1 und 2,
- Figur 12: eine geschnittene Ansicht des Flachbodens nach Figur 11 in Pfeilrichtung XII gesehen,
- Figur 13: in größerem Maßstab den Eckbereich des Fachbodens in Pfeilrichtung XIII der Figur 12 gesehen,
- Figur 14: einen Schnitt entlang der Linie XIV-XIV in Figur 13,
- Figur 15: einen Schnitt entlang der Linie XV-XV in Figur 13,
- Figur 16: in größerem Maßstab den in Figur 2 mit XVI gekennzeichneten Bereich im Schnitt,
- Figur 17: in größerem Maßstab und im Schnitt den in Figur 2 mit XVII gekennzeichneten Bereich,
- Figur 18: das in Figur 1 mit XVIII gekennzeichnete Bauteil in Seitenansicht und in größerem Maßstab,
- Figur 19: einen Schnitt entlang der Linie XIX-XIX in Figur 18,
- Figur 20: in größerem Maßstab die in Figur 2 mit XX gekennzeichnete Einzelheit,
- Figur 21: eine Ansicht in Pfeilrichtung XXI der Figur 20,
- Figur 22: in größerem Maßstab den in Figur 2 mit XXII gekennzeichneten Ausschnittbereich,
- Figur 23: in größerem Maßstab die in Figur 1 mit XXIII gekennzeichneten Einzelheit,
- Figur 24: eine Draufsicht auf Figur 23,
- Figur 25: in größerem Maßstab und im Vertikalschnitt die Figur 1 mit XXV gekennzeichnete Einzelheit,
- Figur 26: eine Draufsicht auf die Figur 25,
- Figur 27: eine Variante der in Figur 22 dargestellten Einzelheit mit einem zusätzlichen Funktionsteil und
- Figur 28: in räumlicher Ansichtsdarstellung das zusätzliche Funktionsteil nach Figur 27.

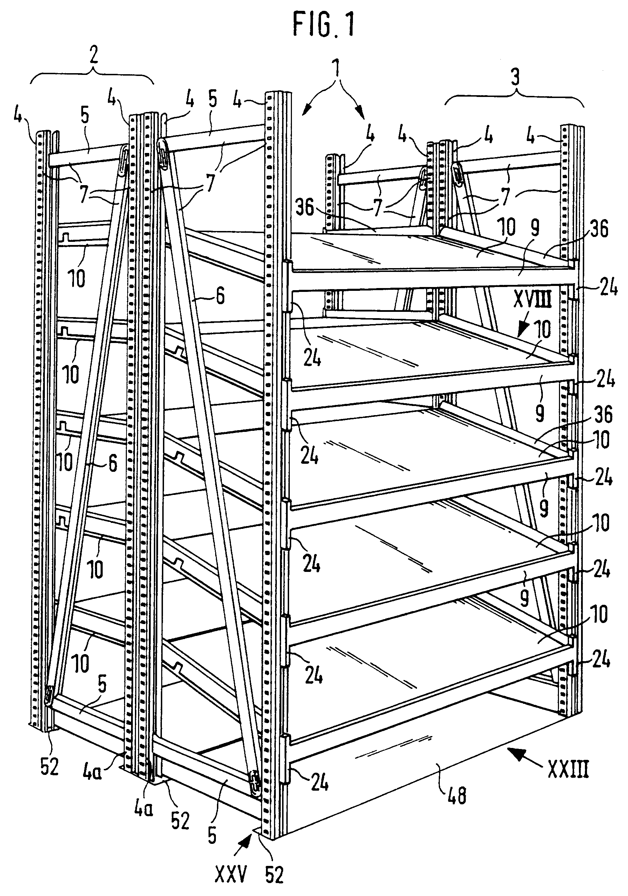

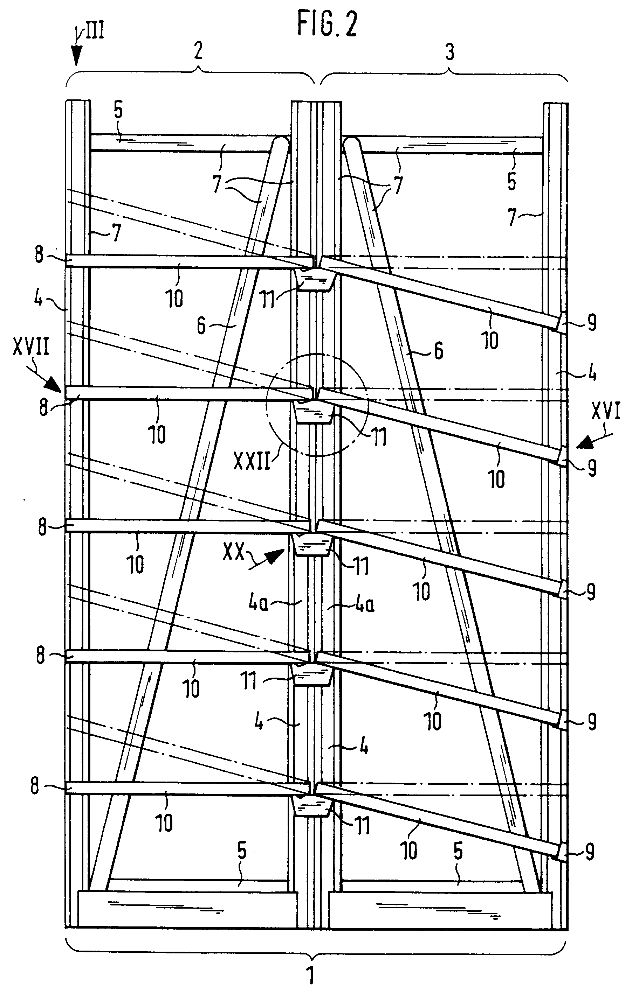

Figur 1 der Zeichnung zeigt in räumlicher Darstellung und Figur 2 in Seitenansicht jeweils ein Montageregal 1, daß von einem hinteren Regal-Grundfeld 2 und einem vorderen Regal-Grundfeld 3 gebildet wird.

Jedes der Regal-Grundfelder 2 und 3 kann auch für sich allein aufgestellt und benutzt werden, so daß anstelle eines doppelreihigen Montageregals 1 nach den Figuren 1 und 2 jeweils ein einreihiges Montageregal gebildet ist.

Jedes Regal-Grundfeld 2 und 3 weist vier Regalpfosten (4) auf, die eine baugleiche Ausführung haben. Jeweils zwei Regalpfosten (4) sind dabei über zwei Tiefenstreben (5) und eine Diagonalstrebe (6) zu einem in sich starren Rahmen (7) miteinander verbunden.

Jeweils zwei Rahmen (7) bilden zusammen mit mehreren Längstraversen (8) oder Anschlagtraversen (9) sowie mit Fachböden (10) jeweils ein Regal-Grundfeld (2 oder 3).

Werden die Regal-Grundfelder (2 und 3) einzeln aufgestellt, dann ist es erforderlich, Längstraversen (8) und/oder Anschlagtraversen (9) benachbart den beiden Längskanten der Fachböden (10) zwischen den zusammengehörenden Rahmen (7) einzubauen.

Werden hingegen die beiden Regal-Grundfelder (2 und 3) unmittelbar hintereinander aufgestellt, wie das in den Figuren 1 und 2 für das Montageregal 1 gezeigt ist, dann stehen zwei Regalpfosten (4a) der Rahmen (7) beider Regal-Grundfelder (2 und 3) jeweils dicht nebeneinander wie das in den Figuren 1 und 2 zu sehen ist. In diesem Falle werden zwischen den zu ein und demselben Regal-Grundfeld 2 bzw. 3 gehörenden Regalpfosten (4a) keine Längstraversen (8) oder Anschlagtraversen (9) eingebaut. Stattdessen findet dann eine unmittelbare Kupplung der beiden aneinanderliegenden Regalpfosten (4a) mittels besonderer Fachbodenträger (11) statt, die in Figur 2 der Zeichnung zu sehen sind.

Bei dem Montageregal (1) nach den Figuren 1 und 2 der Zeichnung sind im Regal-Grundfeld (2) die Fachböden (10) jeweils mit horizontaler Ausrichtung angeordnet. Hingegen haben dort beim Regal-Grundfeld (3) die Fachböden (10) eine einseitig geneigte Einbaulage. Die Anordnung ist dabei so getroffen, daß die dem Mittelbereich des Montageregals (1) zugewendete Längskante der geneigt eingebauten Fachböden (10) höher gelegen ist als deren der rechts befindlichen Entnahmeseite des Montageregals (1) zugewendete Längskante.

Die einander zugewendeten Längskanten der Fachböden (10) beider Regal-Anbaufelder (2 und 3) ruhen dabei jeweils an ihren Enden auf einem gemeinsamen Fachbodenträger (11), und zwar so, daß die höchstgelegene Längskante der geneigten Fachböden (10) sich etwa auf gleicher Ebene mit dem zugehörigen horizontal ausgerichteten Fachboden (10) befindet.

Das in den Figuren 1 und 2 der Zeichnung dargestellte Montageregal (1) ist bedingt durch die beschriebene Einbaulage der Fachböden als ein kombiniertes Vorrats- und Bereitstellungs- bzw. Dispositionsregal aufgebaut.

Wie einerseits durch strichpunktierte Linien und andererseits durch gestrichelte Linien in Figur 2 der Zeichnung angedeutet ist, können aber die einander benachbarten Fachböden (10) beider Regal-Grundfelder (2 und 3) entweder mit Neigungslage (strichpunktiert gezeichnet) oder aber mit horizontaler Lage (gestrichelt gezeichnet) eingebaut werden. Im ersteren Falle ergibt sich dann ein reines Bereitstellungs- bzw. Dispositionsregal mit doppelter Bautiefe oder aber ein reines Vorratsregal mit doppelter Bautiefe.

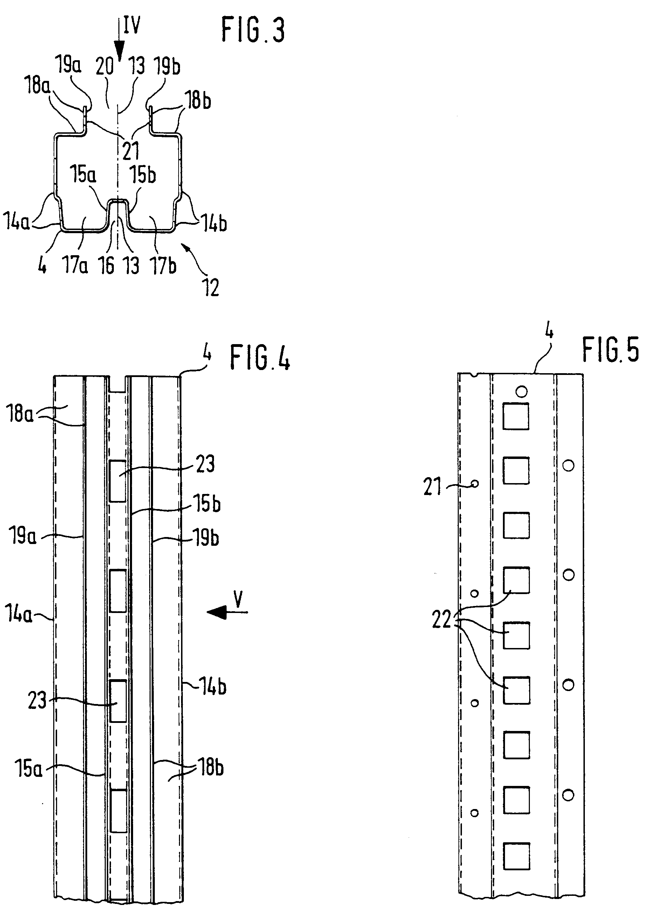

Für ein variierbares Montageregal (1) jeder möglichen Bauart ist es von wesentlicher Bedeutung, daß die Fachböden (10) und folglich auch die Längstraversen (8), die Anschlagtraversen (9) und die Fachbodenträger (10) in Höhenrichtung feinstufig variierbar zwischen den Rahmen (7) eingebaut werden können. Deshalb ist es auch erforderlich, jedem Pfosten (4) der Rahmen (7) eine spezielle Ausbildung zu geben, die aus den Figuren 3 bis 5 der Zeichnung hervorgeht.

Aus Figur 3 der Zeichnung ist dabei erkennbar, daß die Pfosten (4) der Rahmen (7) aus im Querschnitt annähernd etwa W-förmigen Hohlprofilen (12) beispielsweise Blechprofilen bestehen. Diese Blechprofile (12) sind in ihrer Profilform spiegelbildlich zu einer Mittelebene (13-13) ausgeführt und haben folglich zwei äußere W-Profilschenkel (14a und 14b) sowie zwei innere W-Profilschenkel (15a und 15b). Die Breite der beiden äußeren W-Profilschenkel (14a und 14b) ist dabei beträchtlich größer bemessen als die Breite der beiden inneren W-Profilschenkel (15a und 15b), wie das ohne weiteres aus Figur 3 ersichtlich ist.

Über die Breite der beiden inneren W-Profilschenkel (15a und 15b) ist nicht nur der zwischen diesen gelegene Profilraum 16 etwa als eine im Querschnitt trapezförmige, nach außen offene Nut bzw. Rinne begrenzt, sondern es sind dies auch die Profilräume (17a und 17b), welche jeweils zwischen einem äußeren W-Profilschenkel (14a bzw. 14b) und einem inneren W-Profilschenkel (15a und 15b) liegen, weil dort die W-Profilschenkel (14a und 14b) eine zu den W-Profilschenkeln (15a und 15b) entgegengesetzte Neigungslage haben. Über ihren größeren Breitenabschnitt haben jedoch die äußeren W-Profilschenkel (14a und 14b) eine zueinander parallele Ausrichtung und sind darüberhinaus zu ihrem freien Ende hin jeweils noch mit einem einwärts gekröpften Winkelabschnitt (18a und 18b) versehen. Die Endflansche (19a und 19b) dieser Winkelabschnitte 18a und 18b liegen dabei jeweils auf einer Ebene, die etwa mittig zwischen je einem äußeren W-Profilschenkel 14a bzw. 14b und einem inneren W-Profilschenkel 15a bzw. 15b verläuft. In die zwischen den beiden Endflanschen 19a und 19b begrenzte, offene Profilseite 20 des Hohlprofils 12 ragen die Enden der Tiefenstreben 5 hinein und lassen sich dort mit den Pfosten 4 zur Bildung der Rahmen 7 mittels Schrauben oder Nieten verbinden, die beispielsweise in Löcher 21 eingesetzt werden können.

In den beiden äußeren W-Profilschenkeln 14a und 14b sind die Hohlprofile 12 jeweils mit in Längsrichtung gleichmäßig verteilt angeordneten Einhängerasten 22, beispielsweise in Form von quadratischen Durchbrüchen ausgestattet, wie das in Fig. 5 der Zeichnung zu sehen ist. Andererseits weisen die Hohlprofile 12 aber im Scheitelbereich zwischen ihren beiden inneren W-Profilschenkeln 15a und 15b auch noch Einhängerasten 23 auf, die beispielsweise von Rechteckschlitzen gebildet werden, wie das in Fig. 4 der Zeichnung zu sehen ist. Auch diese Einhängerasten 23 sind dabei in Längsrichtung des Hohlprofils 12 mit gleichmäßigen Rasterabständen vorgesehen, die sich jedoch von den Rasterabständen zwischen den Einhängerasten 22 unterscheiden, wie das der Vergleich zwischen den Fig. 4 und 5 erkennen läßt.

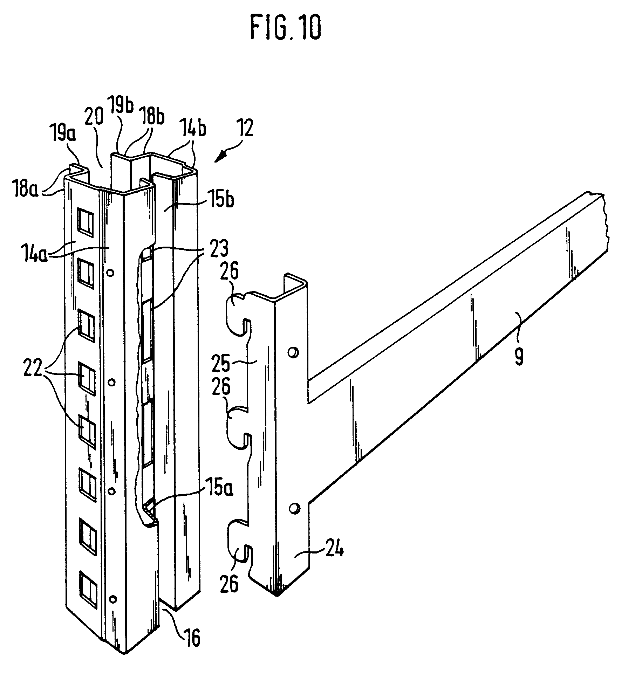

Während die Einhängerasten 22 in den äußeren W-Profilschenkeln 14a und 14b des Hohlprofils 12 zum Zwecke des Einhängens der Fachbodenträger 11 vorgesehen sind, treten mit den Einhängerasten 23 im Scheitelbereich zwischen den beiden inneren W-Profilschenkeln 15a und 15b der Hohlprofile 12 Kupplungsschuhe 24 in Wirkverbindung, die sich jeweils an den Enden der Längstraversen 8 oder der Anschlagtraversen 9 befinden, wie das in den Fig. 1 und 6 bis 10 der Zeichnung zu sehen ist. Diese Kupplungsschuhe 24 haben dabei eine trapezartige Querschnittsform, die auf die Querschnittsform der die Profilräume 17a bzw. 17b des Hohlprofils 17 einschließenden Wandungen abgestimmt ist und diese folglich eng passend umfassen kann. Die freien Endflansche 25 jedes Kupplungsschuhs 24 tragen dabei mehrere, beispielsweise drei, Kupplungshaken 26, die mit den Einhängerasten 23 der Hohlprofile 12 bzw. Pfosten 4 in Eingriff gelangen und dadurch die Längstraversen 8 bzw. Anschlagtraversen 9 hieran sicher festliegen.

Der Profilraum 16 zwischen den beiden inneren W-Profilschenkeln 15a und 15b des Hohlprofils 12 bzw. der Pfosten 14 ist so breit bemessen, und die Breite der Einhängerasten 23 im Scheitelbereich zwischen den beiden inneren W-Profilschenkeln 15a und 15b ist so groß gewählt, daß dort nebeneinander zwei Endflansche 25 mit Kupplungshaken 26 von Kupplungsschuhen 24 aufgenommen werden können. Damit ist die Möglichkeit gegeben, am Hohlprofil 12 bzw. Pfosten 4 unmittelbar nebeneinander die Kupplungsschuhe 24 zweier nach entgegengesetzten Seiten gerichteter Längstraversen 8 oder Anschlagtraversen 9 einzuhängen. An jedes der Regal-Grundfelder 2 und 3 läßt sich somit beidseitig problemlos ein sogenanntes Regal-Anbaufeld anschließen, das aus der betreffenden Anzahl von Längstraversen 8, Anschlagtraversen 9, Fachböden 10 und Fachbodenträgern 11 sowie aus einem zusätzlichen Rahmen 7 zusammengesetzt werden kann. Abschnittweise läßt sich somit die Regallänge den jeweiligen Bedürfnissen problemlos anpassen.

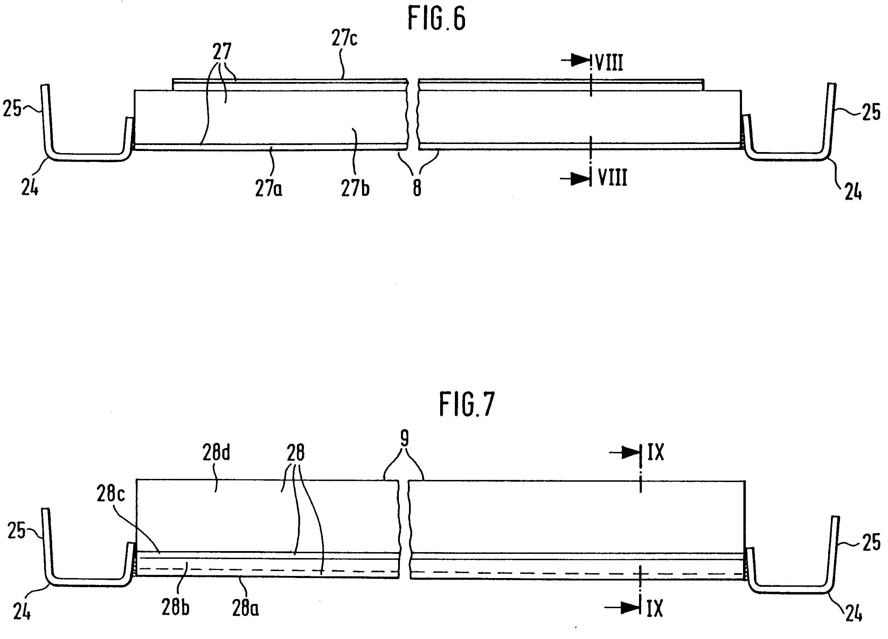

In den Fig. 6 und 7 der Zeichnung ist eine Längstraverse 8 gezeigt, die aus einer im Querschnitt etwa j-förmigen Profilschiene 27 gebildet ist. Sie hat einen rückwärtigen Profilschenkel 27a mit vertikaler Ausrichtung, einen hieran anschließenden, schräg nach abwärts geneigten Profilsteg 27b und einen wiederum hieran stumpfwinklig anschließenden, kurzen Profilschenkel 27c.

Eine solchermaßen Profilierte Längstraverse kommt zum Einsatz, wenn beispielsweise ein Regal-Grundfeld 3 mit geneigt eingebauten Fachböden 10 für sich allein in Gebrauch genommen werden soll, also nicht innerhalb von zwei hintereinander aufgestellten Regal-Grundfeldern 2 und 3 Verwendung finden.

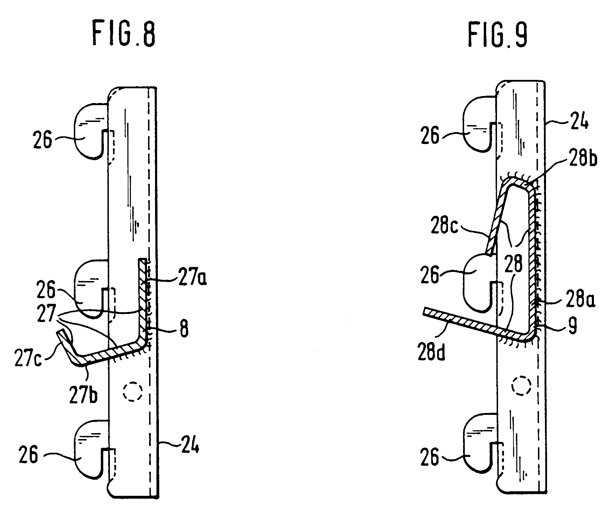

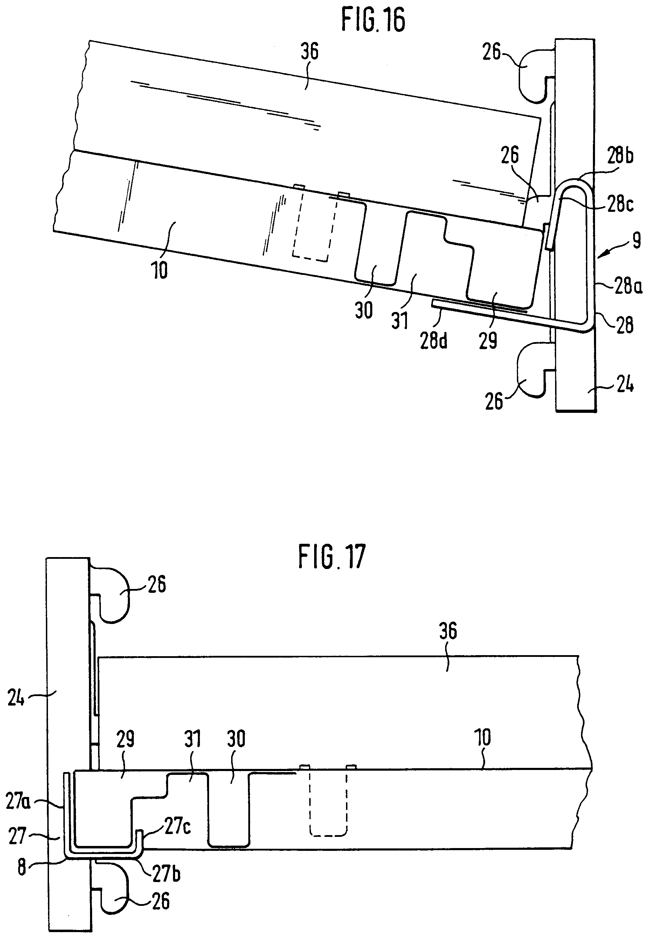

Die aus den Fig. 7 und 9 ersichtliche Anschlagtraverse 9 benutzt eine Profilschiene 28, welche etwa die Querschnittsform eines kopfstehenden J aufweist. Sie hat einen etwa vertikalen Profilsteg 28, einen hiervon stumpfwinklig und schräg nach oben abgehenden Profilsteg 28b sowie zwei Profilschenkel 28c und 28d, welche im wesentlichen rechtwinklig zueinander gerichtet sind. Dabei steht der Profilschenkel 28c etwa im rechten Winkel vom Profilsteg 28b ab, während der Profilschenkel 28d spitzwinklig, also mit einem Winkel von weniger als 90^{o} vom Profilsteg 28a abgeht. Die Anschlagtraversen 9 mit der aus Fig. 9 ersichtlichen Bauform einer Profilschiene 28 gelangt an der Entnahmeseite von Montageregalen 1 bei solchen Regal-Grundfeldern 3 bzw. Regal-Anbaufeldern zum Einsatz, denen die Fachböden 10 eine in Querrichtung geneigte Einbaulage haben, wie das außer den Fig. 1 und 2 auch noch der später beschriebenen Fig. 16 der Zeichnung entnommen werden kann. Hierbei ruht der Fachboden 10 mit seiner Unterseite auf dem Profilschenkel 28d und stützt sich mit seiner Längsstirnfläche gegen den unteren Endabschnitt des Profilschenkels 28c ab, während dieser und der Profilsteg 28b die Oberseite des Fachbodens 10 um ein gewisses Maß überragen und somit einen Anschlag für das auf dem Fachboden 10 befindliche Lagergut bilden.

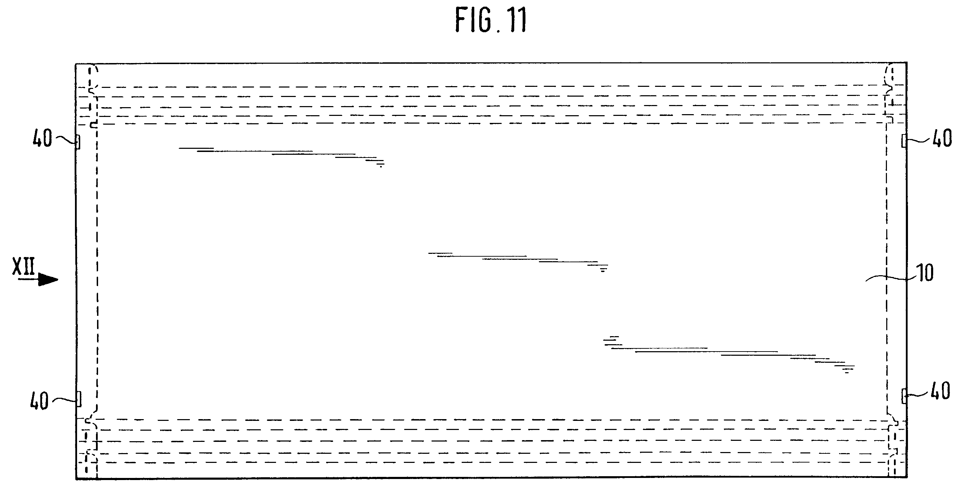

Aus den Fig. 11 bis 15 der Zeichnung ergibt sich, welche Ausbildung die Fachböden 10 haben, welche im Montageregal 1 bzw. in den Regal-Grundfeldern 2 und 3, aber auch in den Regal-Anbaufeldern zum Einsatz gelangen. Dabei wird deutlich, daß die Fachböden 10 und durch Abkanten der Längs- und Querränder von Blechzuschnitten gebildet sind.

Zur Erzielung einer hohen Formstabilität der Fachböden 10 werden entlang deren beiden Längsränder durch Abkantungen gebildete, in sich geschlossene Rohrprofile 29 und 30 vorgesehen, wobei jeweils das äußere Rohrprofil 29 einen winkelförmig gestuften Querschnitt umschließt, während das innere Rohrprofil 30 einen Rechteckquerschnitt einschließt. Zwischen beiden Rohrprofilen 29 und 30 ist eine winkelförmig gestufte Rinne 31 vorhanden.

Es hat sich gezeigt, daß die Rohrprofile 29 und 30 zusammen mit der Rinne 31 einen Stabilisierungseffekt ergeben, der nicht nur die Verwindungssteifigkeit, sondern auch die Biegesteifigkeit der Fachböden beträchtlich erhöht.

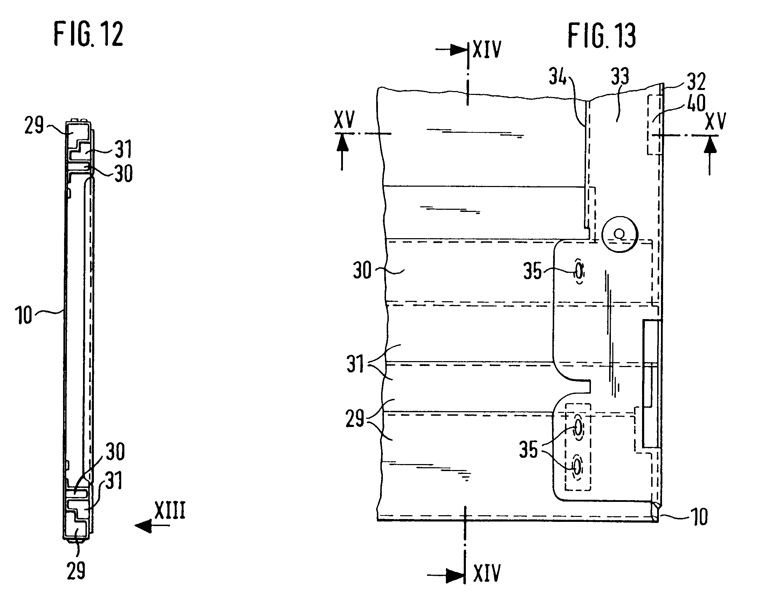

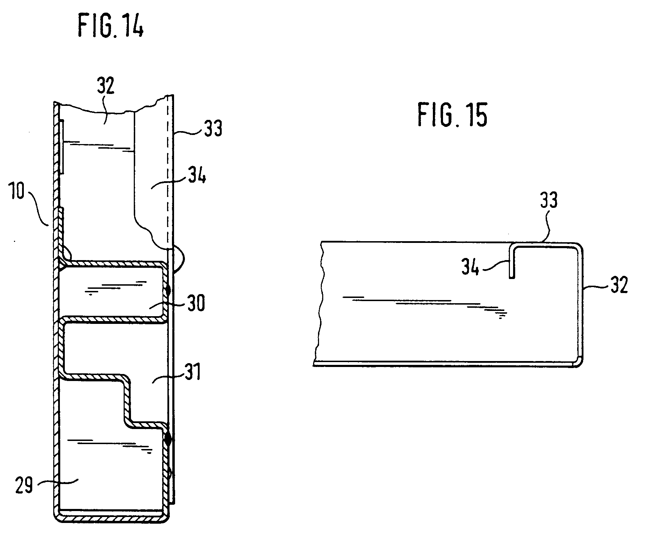

Zur Versteifung der Querkanten weisen die Fachböden 10 dort Abkantungsabschnitte 32, 33 und 34 auf (Fig. 15), die den Querkanten eine etwa J-förmige Profilierung ergeben. Diese J-förmige Profilierung erstreckt sich jedoch nur über denjenigen Längenbereich der Querkanten, welcher zwischen den zu den Längskanten parallelen beiden Rohrprofilen 30 liegt, wie das den Fig. 12 und 13 der Zeichnung entnommen werden kann. Im Bereich der Rohrprofile 29 und 30 sowie der Rinne 31 ist die Querkantenabkantung gegen die unteren Rohr-Begrenzungsflächen angelegt und daran, beispielsweise durch Schweißpunkte 35, befestigt, wie das aus Fig. 13 ersichtlich ist.

Die Zuordnung eines mit Neigungslage angeordneten Fachbodens 10 zu einer Anschlagtraverse 9 der den Fig. 7 und 9 entsprechenden Bauart ist aus Fig. 16 der Zeichnung ersichtlich. Dabei ist dort auch zu sehen, wie die aus den Rohren 29 und 30 sowie der Rinne 31 bestehenden Längskanten-Versteifungen des Fachbodens 10 der Anschlagtraverse 9 zugeordnet sind.

In Fig. 17 der Zeichnung ist die Zuordnung eines horizontal ausgerichteten Fachbodens 10 zu einer Längstraverse 8 gezeigt, deren Profilschiene 27 eine gegenüber den Fig. 6 und 8 abweichende Gestaltung hat. Dort schließt sich nämlich an den vertikalen Profilschenkel 27a ein horizontaler Profilsteg 27b an, der wiederum in einen vertikalen Profilschenkel 27c übergeht. Erkennbar ist dabei, daß die im Querschnitt etwa L-förmige Profilschiene 27 das zur Längskantenversteifung abgekantete Rohr 29 des Fachbodens 10 von unten her umfaßt, wobei der Profilschenkel 27c in die stufenförmige Rinne 31 eingreift und dadurch eine sichere Lagenfixierung des Fachbodens 10 gegen Verschiebung bewirkt.

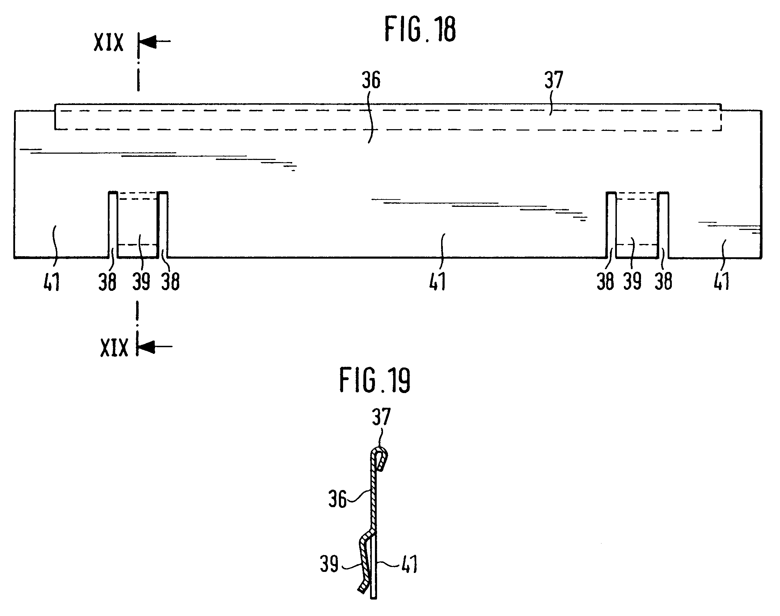

In Fig. 1 der Zeichnung ist angedeutet, daß es in manchen Fällen zweckmäßig sein kann, den Querkanten der Fachböden besondere Bordwände 36 von relativ geringer Höhe als seitliche Randbegrenzung zuzuordnen. Diese Bordwände 36 sind auch in den Fig. 16 und 17 der Zeichnung erkennbar. Ausführlich wird eine solche Bordwand 36 in den Fig. 18 und 19 der Zeichnung gezeigt. Dabei ist zu sehen, daß der obere Längsrand zu Versteifungszwecken mit einer Umbördelung 37 versehen ist, während vom unteren Längsrand aus durch paarweise quergerichtete Spaltschnitte 38 mehrere Zungen 39 ausgebildet werden, die federartig nach einwärts verkröpft werden. Diese Klemmzungen 39 werden in Längsschlitze 40 eingeführt, welche sich, wie die Fig. 11 und 13 der Zeichnung erkennen lassen, unmittelbar neben der Abkantung 32 an den Querkanten der Fachböden 10 befinden. Mit den seitlich der Zungen 39 gelegenen, ebenen Breitenabschnitten 41 legt sich die Bordwand 36 stützend an die Außenfläche der Querkanten-Abkantung 32 an, mit der Folge, daß die Bordwand 36 ausgerichtet wird und nach oben über den betreffenden Fachboden vorsteht, wie das den Fig. 16 und 17 entnehmbar ist.

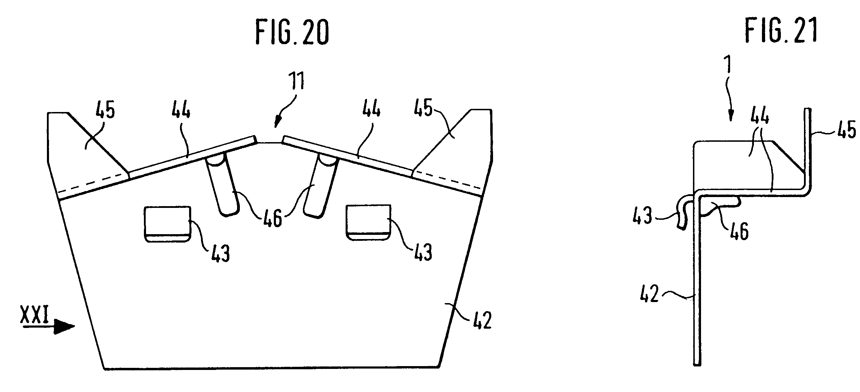

In den Fig. 20 und 21 der Zeichnung wird im einzelnen die Ausgestaltung der Fachbodenträger 11 gezeigt, die in Fig. 2 der Zeichnung lediglich schematisch angedeutet sind. Dabei ist erkennbar, daß die Fachbodenträger 11 eine ebene Kupplungsplatte 42 aufweisen, die rückseitig mit hakenförmig nach abwärts gerichteten Rastzungen 43 versehen ist. Oben sind von der Kupplungsplatte 42 zwei Stützflansche 44 abgewinkelt und dabei dachartig gegeneinander geneigt vorgesehen. Von den Endkanten jedes Stützflansches ist darüber hinaus jeweils mindestens ein Fixierzahn oder eine Fixierzunge 45 nach aufwärts gerichtet vorgesehen.

Zu Versteifungszwecken sind zwischen der Kupplungsplatte 42 und jedem Stützflansch 44 jeweils noch Stabilisierungssicken 46 ausgeformt.

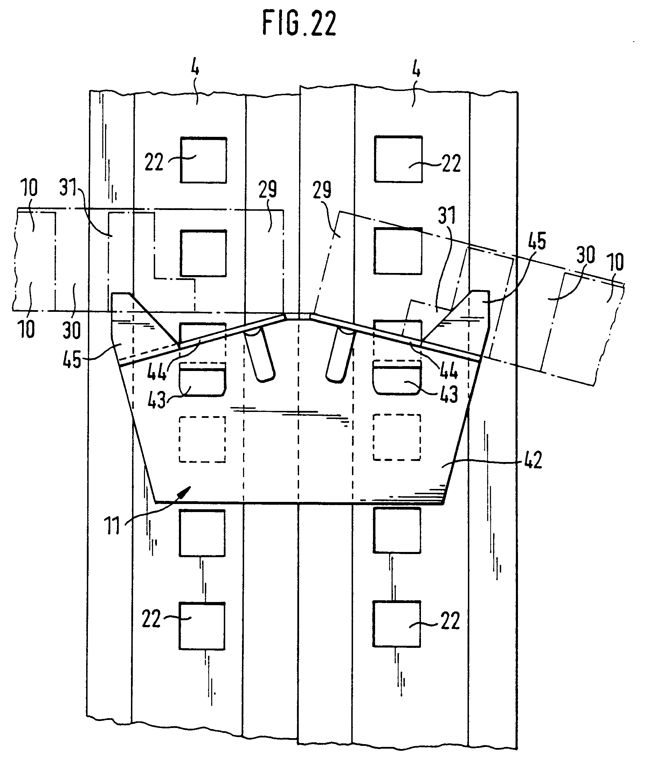

Der Fig. 22 kann entnommen werden, wie die Fachbodenträger 11 mit den beiden unmittelbar in Längsrichtung aneinanderliegenden Regalpfosten 4 in Kupplungseingriff gebracht werden. Hierbei treten nämlich die beiden Kupplungszungen 43 der Kupplungsplatte in die Einhängerasten 22 der beiden Regalpfosten 4 ein und stellen dadurch über die Kupplungsplatte 42 eine feste Verbindung her. Werden nun die Fachböden 10 auf die Fachbodenträger 11 aufgesetzt, dann erhalten deren dem Längsrand benachbarte Rohrprofile 29 ihr Widerlager auf den Stützflanschen 44, und zwar unabhängig davon, ob der betreffend Fachboden 10 waagerecht ausgerichtet ist oder aber eine geneigte Lage einnimmt. Gleichzeitig treten die von den Stützflanschen 44 hochragenden Fixierzähne oder -zungen 45 von unten her in die Rinne 31 zwischen den beiden Rohrprofilen 29 und 30 ein und bewirken dadurch eine sichere Lagenfixierung der Fachböden 10 relativ zum jeweiligen Fachbodenträger 11.

Während es bei der Benutzung der Fachbodenträger 11 keinerlei Schwierigkeiten bereitet, die Fachböden 10 beider Regal-Grundfelder 2 und 3 ordnungsgemäß hierauf abzustützen, wenn diese in beiden Regal-Grundfeldern entweder Horizontallage einnehmen oder aber in einem Regal-Grundfeld horizontal und im anderen Regal-Grundfeld geneigt angeordnet sind, können sich hingegen Abstützschwierigkeiten ergeben, wenn in beiden Regal-Grundfeldern eine übereinstimmende Neigungslage für die Fachböden in Frage kommt. Der in diesem Falle höher liegend eingebaute Fachboden 10 gelangt dann nämlich im Bereich seiner tiefgelegenen Längskante auf dem Fachbodenträger 11 in einer Stellung zur Stützauflage, die die obere Längskante des in Neigungsrichtung nachgeordneten Fachbodens 10 unterschneidet.

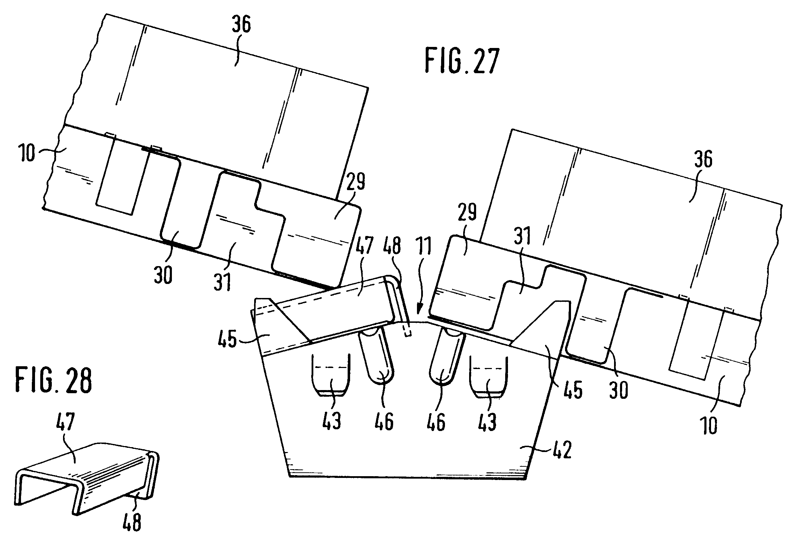

Damit nun eine solche Unterschneidungslage vermieden wird, ist nach Fig. 27 der Zeichnung die Benutzung eines Unterfütterungsadapters 47 vorgesehen, der sich auf die Stützflansche 44 aufsetzen läßt und durch eine Fixierzunge 48 an diesem ausrichten läßt. Die Raumform des Unterfütterungsadapters 47 ist dabei aus Fig. 28 der Zeichnung ohne weiteres erkennbar. Fig. 27 macht hingegen deutlich, daß durch Benutzung des Unterfütterungsadapters 47 die beiden schräg liegenden Fachböden 10 eine gemeinsame Fachbodenebene bilden bzw. erhalten.

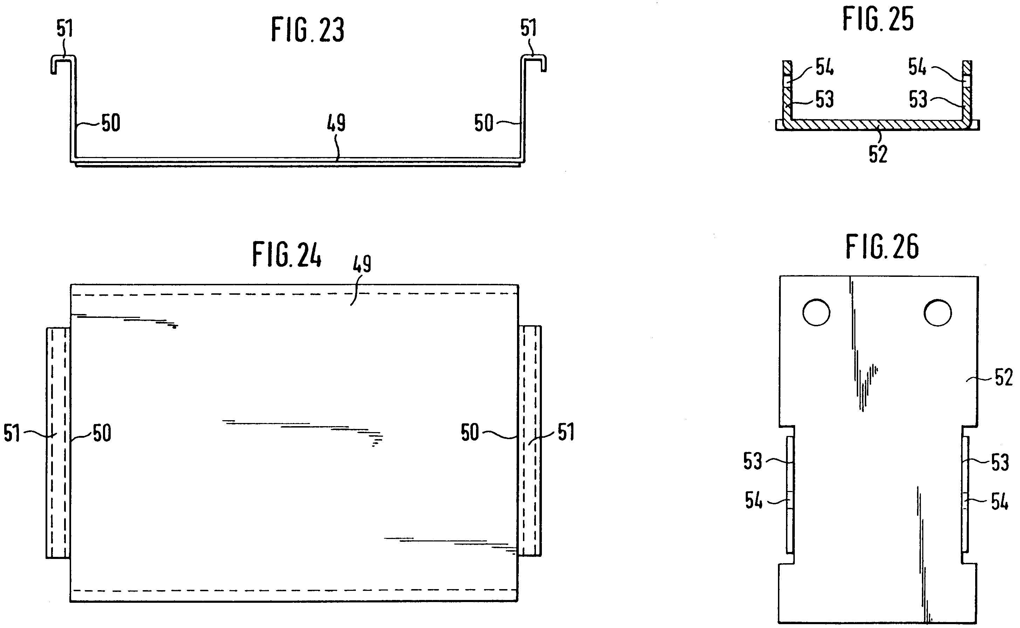

Die Fig. 1 der Zeichnung zeigt noch auf, daß das Montageregal 1 bzw. dessen Regal-Grundfelder 2 und 3 unten durch eine Bodenwanne 48 begrenzt werden können. Diese Bodenwanne 48 hat dabei eine flache Grundplatte 49 und zwei hiervon hochgestellte Seitenwangen 50, deren oberen Enden nach außen und unten gerichtete, hakenförmige Abbiegungen 51 aufweisen, wie das besonders deutlich den Fig. 23 und 24 entnommen werden kann. Diese Bodenwannen 48 können vorteilhafterweise dann vorgesehen werden, wenn es nötig ist, unterhalb des unteren Fachbodens einen Durchschubbereich für Transport- und Lagerkästen zu bilden, die an der jeweils gegenüberliegenden Regalseite benötigt werden.

In manchen Fällen kann es sich auch als zweckmäßig erweisen, die unteren Enden der Regalpfosten 4 jeweils mit Fußplatten 52 auszustatten, wie sie in Fig. 1 angedeutet sowie in den Fig. 25 und 26 ausführlich gezeigt sind. Diese Fußplatten 52 können nach aufwärts abgewinkelte Flansche 53 erhalten, welche in die Hohlprofile 12 der Regalpfosten 4 hineinragen und Löcher 54 aufweisen, die im Bereich der Einhängerasten 22 das Einsetzen von Befestigungselementen ermöglichen. Das vorstehend beschriebene, variierbare Montageregal 1 läßt sich auf der Basis einer Grundfeld-Anbaufeld-Konzeption auf einfache Art und Weise in beliebiger Baulänge verwirklichen. Dabei ist jede Kombination von Vorrats-Bereitstellungs- bzw. Dispositionsregalen mit horizontalen und schrägen Fachböden möglich. Ebenso können einreihige Vorratsregale mit geraden Fachböden, wie auch einreihige Bereitstellungsregale mit schrägen Fachböden verwirklicht werden. Die stabile Rahmenkonstruktion mit in Schubrichtung der Lager- und Transportkästen wirkenden Tiefenstreben und Diagonalstreben sowie die Längsstabilität durch in die Fachböden integrierte Längstraversen ergeben eine hohe Standfestigkeit. Die Regalmontage kann ohne wesentlichen Werkzeugaufwand rein manuell, beispielsweise lediglich mit Hilfe eines Hammers, vorgenommen werden, weil keinerlei Verschraubungen nötig sind und die Verbindung hintereinanderstehender Regal-Grundfelder und Anbaufelder allein durch die Fachbodenträger bewirkt wird.

Zweckmäßig und vorteilhaft ist auch die beliebige Höhenverstellbarkeit aller Fachböden entsprechend den Rasterabständen der in den Regalpfosten vorgesehenen Einhängerasten.

## Patentansprüche

1. Variierbares Montageregal (1),
bestehend aus von Pfosten (4), Tiefenstreben (5) und Diagonalstreben (6) gebildeten Seitenrahmen (7),
aus die Pfosten (4) zweier Seitenrahmen (7) lösbar, aber starr untereinander verbindenden Längstraversen (8) und Anschlagtraversen (9)
sowie aus Fachböden (10), welche jeweils zwischen zwei durch die Längstraversen (8) und/oder Anschlagtraversen (9) miteinander verbundene Seitenrahmen (7) einsetzbar sind,
wobei die Fachböden (10) zwischen zwei durch mehrere Längstraversen (8) und/oder Anschlagtraversen (9) miteinander gekuppelte Seitenrahmen (7) wahlweise mit einer horizontalen Ausrichtung oder mit einer einseitig in ihrer Querrichtung geneigten Ausrichtung einsetzbar sind,
wobei mindestens an der Entnahmeseite des Regals (1, 2 3) jedem Fachboden (10) eine Anschlagtraverse (9) als Tragelement zugeordnet ist,
und wobei zwei Seitenrahmen (7) mit den Längstraversen (8) und/oder Anschlagtraversen (9) sowie den Fachböden (10) jeweils miteinander ein Regal-Grundfeld (2, 3) bilden,
**dadurch gekennzeichnet,**
daß die der Entnahmeseite des Regals (1, 2, 3) als Tragelement für die Fachböden (10) zugeordnete Anschlagtraverse (9) zugleich ein Widerlagerelement oder einen Anschlag für das auf den Fachböden (10) befindliche Lagergut bildet,
daß zwei in Hintereinanderanordnung vorgesehene Regal-Grundfelder (2, 3) ihre Kupplung miteinander über Fachbodenträger (11) erhalten, welche gleichzeitig in die einander unmittelbar benachbarten Pfosten (4) ihrer Seitenrahmen (7) einrückbar sind,
und daß die einander zugewendeten Längskanten der Fachböden (10) beider Regal-Grundfelder (2, 3) jeweils an ihren Enden auf einem gemeinsamen Fachbodenträger (11) etwa auf gleicher Ebene ruhen.

2. Montageregal nach Anspruch 1,
**dadurch gekennzeichnet**,
daß sämtliche Fachböden (10) beider Regal-Grundfelder (2, 3) horizontal ausgerichtet sind und jeweils zwei Fachböden (10) auf gleicher Ebene hintereinander liegen, und daß dabei die einander zugewendeten Längskanten zweier benachbarter Fachböden (10) ausschließlich in ihrem Endbereich auf Fachbodenträgern (11) ruhen.

3. Montageregal nach Anspruch 1,
**dadurch gekennzeichnet,**
daß sämtliche Fachböden (10) des einen Regal-Grundfeldes (2) horizontale Ausrichtung haben, während sämtliche Fachböden (10) des zweiten Regal-Grundfeldes (3) eine Neigungslage einnehmen, daß die eine Längskante der geneigten Fachböden (10) auf gleicher Ebene mit der Längskante des benachbarten, horizontalen Fachbodens (10) liegt, und daß dabei die einander zugewendeten Längskanten zweier benachbarter Fachböden (10) ausschließlich in ihrem Endbereich auf Fachbodenträgern (11) ruhen.

4. Montageregal nach Anspruch 1,
**dadurch gekennzeichnet**,
daß sämtliche Fachböden (10) beider Regal-Grundfelder (2, 3) mit Neigungslage eingebaut sind und sich jeweils Zweifachböden (10) auf gleicher Ebene aneinander anschließen, und daß dabei die einander zugewendeten Längskanten zweier benachbarter Fachböden (10) ausschließlich in ihrem Endbereich auf Fachbodenträgern (11) ruhen und jedem Fachbodenträger (11) im Bereich der unteren Längskante des höher gelegenen Fachbodens (10) ein Unterfütterungsadapter (47) zugeordnet ist.

5. Montageregal nach einem der Ansprüche 1 bis 4,
**dadurch gekennzeichnet,**
daß die Pfosten (4) der Seitenrahmen (7) aus im Querschnitt etwa W-förmigen Hohlprofilen (12) bestehen, die sowohl in beiden äußeren W-Profilschenkeln (14a, 14b) als auch im Scheitelbereich zwischen den beiden inneren W-Profilschenkeln (15a, 15b) mindestens eine Reihe von in Längsrichtung gleichmäßig verteilt angeordneten Einhängerasten (22, 23) aufweisen, während in deren Profilseite (20) die Enden der Tiefenstreben (5) hineinragen, welche an den äußeren Profilschenkeln verankert sind (19a, 19b; 21), daß die Einhängerasten (23) im Scheitelbereich der inneren W-Profilschenkel (15a und 15b) jedes Pfostens (4) Kupplungseingriffe für an den Enden der Längstraversen (8) und/oder Anschlagtraversen (9) vorgesehene Kupplungsschuhe (24) bilden, welche je einen äußeren W-Profilschenkel (14a, 14b) und einen inneren W-Profilschenkel (15a, 15b) des Pfosten- bzw. Hohlprofilquerschnitts angepaßt umfassen, während sie mit Kupplungshaken (26) in die Kupplungseingriffe (23) einrückbar sind, und daß die Einhängerasten (22) an den äußeren W-Profilschenkeln (14a, 14b) jedes Pfostens (4) als Kupplungseingriffe für Rastzungen (43) an den Fachbodenträgern (11) und/oder Pfostenverbindern vorgesehen sind.

6. Montageregal nach Anspruch 5,
**dadurch gekennzeichnet,**
daß die freien Enden der beiden äußeren W-Profilschenkel (14a, 14b) der Pfosten (4) jeweils mit einem einwärts gekröpften Winkelabschnitt (18a, 18b) versehen sind, daß die Endflansche (19a, 19b) beider Winkelabschnitte (18a, 18b) je auf einer Ebene liegen, die etwa mittig zwischen je einem äußeren W-Profilschenkel (14a, 14b) und einem inneren W-Profilschenkel (15a, 15b) verläuft, daß sowohl der Querschnitt des Profilraums (17a, 17b) zwischen einem äußeren W-Profilschenkel (14a, 14b) und einem inneren W-Profilschenkel (15a, 15b) als auch der Querschnitt des Profilraums (16) zwischen den beiden inneren W-Profilschenkeln (15a, 15b) etwa trapezförmig begrenzt ist, und daß die Endflansche (19a, 19b) der beiden Winkelabschnitte (18a, 18b) mit Befestigungseingriffen (21) z. B. Löchern, für die Tiefenstreben (5) und/oder Diagonalstreben (6) der Seitenrahmen (7) versehen sind.

7. Montageregal nach einem der Ansprüche 5 oder 6,
**dadurch gekennzeichnet,**
daß mit den im Scheitelbereich der inneren W-Profilschenkel (15a, 15b) jedes Pfostens (4) vorgesehene Einhängerasten (23) gleichzeitig die Kupplungshaken (26) zweier nach entgegengesetzten Seiten gerichteter Längstraversen (8) und/oder Anschlagtraversen (9) in Eingriff sind, und daß dabei die zweite Gruppe von Längstraversen (8) und/oder Anschlagtraversen (9) zusammen mit einem weiteren Seitenrahmen (7) ein Regal-Anbaufeld bilden.

8. Montageregal nach einem der Ansprüche 1 bis 7,
**dadurch gekennzeichnet,**
daß die Längstraversen (8) und/oder Anschlagtraversen (9) aus starr zwischen zwei zueinander spiegelbildlich angeordneten und ausgebildeten Kupplungsschuhen (24) sitzenden Profilschienen (27, 28) bestehen, die entweder einen etwa L-förmigen Querschnitt (Figuren 8 und 17) oder aber etwa den Querschnitt eines kopfstehenden J (Figuren 9 und 16) aufweisen.

9. Montageregal nach einem der Ansprüche 1 bis 8,
**dadurch gekennzeichnet,**
daß die Fachböden (10) unterseitig an ihren Längs- und Querkanten jeweils mit durch Abkantungen gebildeten Versteifungsprofilen (29, 39, 32, 33, 34) versehen sind, daß diese Versteifungsprofile (29, 30) an den Längskanten aus mehreren rohrartig geschlossenen und im Abstand (31) zueinander parallel verlaufenden Profilabschnitten bestehen, deren Abstandsbereich (31) eine abgestufte Gestaltung hat, und daß der abgestufte Abstandsbereich (31) einen Halteeingriff für die Profilschienen (27, 28) der Längstraversen (8) und/oder Anschlagtraversen (9) sowie für an den Fachbodenträgern (11) vorgesehene Fixierzähne oder -zungen (45) bildet.

10. Montageregal nach einem der Ansprüche 1 bis 9,
**dadurch gekennzeichnet,**
daß die Fachbodenträger (11) oben an einer die Rastzungen (43) tragenden Kupplungsplatte (42) mit zwei abgewinkelten und dachförmig gegeneinander geneigten Stützflanschen (44) für die Fachböden (10) versehen sind, daß von den Endkanten dieser Stützflansche (44) jeweils wiederum die Fixierzähne oder -zungen (45) nach aufwärts gerichtet sind, und daß zwischen der Kupplungsplatte (42) und den Stützflanschen (44) jeweils Stabilisierungssicken (46) ausgeformt sind.

11. Montageregal nach einem der Ansprüche 4 bis 10,
**dadurch gekennzeichnet,**
daß die Unterfütterungsadapter (47) durch Fixierzungen (48) auf den Stützflanschen (44) der Fachbodenträger (11) verankerbar und/oder ausrichtbar sind.

12. Montageregal nach einem der Ansprüche 1 bis 11,
**dadurch gekennzeichnet,**
daß mit den Querkanten der Fachböden (10) Bordwände (36) lösbar zu kuppeln sind (39, 40).

13. Montageregal nach Anspruch 12,
**dadurch gekennzeichnet**,
daß die Bordwände (36) einerseits über den unteren Teil (41) ihrer Höhe an der Außenseite der Querkanten-Versteifungsprofile (32, 33, 34) des Fachbodens (10) anliegen, während sie andererseits mit aus ihrer Ebene verkröpften Zungen (39) von oben her in Schlitze (40) eingreifen, die randnah in der Fachboden-Oberseite vorgesehen sind.

14. Montageregal nach einem der Ansprüche 1 bis 13,
**dadurch gekennzeichnet,**
daß zumindest die an der Entnahmeseite des Regals (1, 2, 3) liegend eingebauten Längstraversen (8) und/oder Anschlagtraversen (9) eine Bauhöhe ihrer Profilschienen (27, 28) aufweisen, die die Bauhöhe der Fachböden (19) überschreitet (Figuren 9 und 16).

## Claims

1. A kit for a variable rack (1) which consists of sideframes (7) formed from uprights (4), spreaders (5) and diagonal struts (6), of longitudinal tiebars (8) and stop-tiebars (9) which connect the uprights (4) of two sideframes (7) detachably but rigidly together, as well as of trays (10) which may be inserted between a pair of sideframes (7) connected together by the longitudinal tiebars (8) and/or stop-tiebars (9),
where the trays (10) may at option be inserted with a horizontal alignment or with an alignment sloping to one side in their transverse direction between two sideframes (7) coupled together by a number of longitudinal tiebars (8) and/or stop-tiebars (9),
one stop-tiebar (9) being associated as a supporting element with each tray (10) at least at the withdrawal side of the rack (1, 2, 3), and two sideframes (7) with the longitudinal tiebars 98) and/or stop-tiebars (9) as well as the trays (10) forming together in each case one main rack panel (2, 3), **characterized in that**
the stop-tiebar (9) associated as a supporting element for the tray (10) with the withdrawal side of the rack (1, 2, 3), forms at the same time an abutment element or stop for the stored material lying on the tray (10), that two main rack panels (2, 3) provided in an arrangement one behind the other obtain their coupling together via tray bearers (11) which at the same time may be engaged in those uprights (4) in their respective sideframes (7) which are directly adjacent,
and that the longitudinal edges facing one another on the respective trays (10) of the pair of main rack panels (2, 3) in each case rest at their ends on about the same plane on a common tray bearer (11).

2. A rack kit as in Claim 1, **characterized in that** all of the trays (10) of both main rack panels (2, 3) are aligned horizontally and every two trays (10) lie one behind the other on the same plane, and that in that case the longitudinal edges facing one another on two adjacent trays (10) rest exclusively in their end regions upon tray bearers (11).

3. A rack kit as in Claim 1, **characterized in that** all the trays (10) of the one main rack panel (2) have a horizontal alignment whilst all of the trays (10) of the second main rack panel (3) adopt a sloping position that the one longitudinal edge of the sloping tray (10) lies on the same plane with the longitudinal edge of the adjacent horizontal tray (10) and that in that case the longitudinal edges facing one another on two adjacent trays (10) rest exclusovely in their end regions upon tray bearers (11).

4. A rack kit as in Claim 1, **characterized in that** all the trays (10) of both main rack panels (2, 3) are built in with a sloping position and every two trays (10) are connected together on the same plane, and that in that case the longitudinal edges facing one another on two adjacent trays (10) rest exclusively in their end regions upon tray bearers (11), and a lining adapter (47) is associated with each tray bearer (11) in the region of the lower longitudinal edge of the higher placed tray (10).

5. A rack kit as in one of the Claims 1 to 4, **characterized** in that the uprights (4) of the sideframes (7) consist of hollow profiles (12) of cross-sectional shape roughly like a W, which exhibit both in the two outer arms (14a, 14b) of the W-profile and in the region of the peak between the two inner arms (15a, 15b) of the W-profile at least one row of suspension-notches (22, 23) arranged in regular distribution in the longitudinal direction, whilst the ends of the spreaders (5) project into the side (20) of the profile and are anchored on the outer arms of the profile (19a, 19b; 21), that the suspension-notches (23) in the region of the peak between the inner arms (15a, 15b) of the W-profile of each upright (4) form coupling-catches for ooupling-shoes (24) which are provided at the ends of the longitudinal tiebars (8) and/or stop-tiebars (9), and each of which embraces with a close fit an outer arm (14a, 14b) and an inner arm (15a, 15b) of a W-profile, whilst they may be engaged by coupling-hooks (26) in the coupling-catches (23), and that the suspension notches (22) in the outer arms (14a, 14b) of each upright (4) are foreseen as coupling-catches for catch-tongues (43) on the tray bearers (11) and/or upright connectors.

6. A rack kit as in Claim 5, **characterized in that** the free ends of the two outer arms (14a, 14b) of the W-profile of the uprights (4) are provided in each case with an inwards cranked angle portion (18a, 18b), that each end flange (19a, 19b) of the two angle portions (18a, 18b) lies upon a plane which runs about centrally between an outer arm (14a, 14b) of the W-profile and an inner arm (15a, 15b) of the W-profile, that both the cross-section of the space (17a, 17b) in the profile between an outer arm (14a, 14b) of the W-profile and an inner arm (15a, 15b) of the W-profile, and the cross-section of the space (16) between the two inner arms (15a, 15b) of the W-profile have a roughly trapezoidal boundary, and that the end flanges (19a, 19b) of the two angle portions (18a, 18b) are provided with fastener-catches (21), e.g., holes, for the spreaders (5) and/or diagonal struts (6) of the sideframes (7).

7. A rack kit as in one of the Claims 5 or 6, **characterized** in that with the suspension-notches (23) provided in the region of the peak between the inner arms (15a, 15b) of the W-profile of each upright (4) the coupling-hooks (26) of two longitudinal tiebars (8) and/or stop-tiebars (9) directed towards opposite sides are at the sane time in engagement, and that in that case the second group of longitudinal tie-bars (8) and/or stop-tiebars (9) form together with a further sideframe (7) a rack-extension panel.

8. A rack kit as in one of the Claims 1 to 7, **characterized** in that the longitudinal tiebars (8) and/or stop-tiebars (9) consist of profiled rails (27, 28) which are seated rigidly between pairs of coupling-shoes (24) arranged and made in mirror image of one another, and exhibit either a roughly L-shaped cross-section (Figures 8 and 17) or else a cross-section roughly that of an inverted J (Figures 9 and 16).

9. A rack kit as in one of the Claims 1 to 8, **characterized** in that the trays (10) are provided on the underside with stiffening profiles (29, 39, 32, 33, 34) formed by folding along their longitudinal and cross-edges, that these stiffening profiles (29, 30) at the longitudinal edges consist of a number of profiled portions closed like tube and running in parallel with an interval (31) between, their interval (31) having a stepped shape, and that the stepped interval (31) forms a retainer for the profiled rails (27, 28) of the longitudinal tiebars (8) and/or stop-tiebars (9) as well as for locator teeth or tongues (45) provided on the tray bearers (11).

10. A rack kit as in one of the Claims 1 to 9, **characterized** in that in that the tray bearers (11) on top of a couplingplate (42) carrying the catch-tongues (43) are provided with two flanges (44) bent down at an angle to one another like a roof to support the trays (10), that from the end edges of each of these supporting flanges (44) the locator teeth or tongues (45) are again directed outwards, and that between the coupling-plate (42) and each of the supporting flanges (44) stabilizing beads (46) are shaped out.

11. A rack kit as in one of the Claims 4 to 10, **characterized i**n that the lining adapters (47) may be anchored or aligned on the supporting flanges (44) of the tray bearers (11) by locator tongues (48).

12. A rack kit as in one of the Claims 1 to 11, **characterized** in that edgewalls (36) may be coupled detachably (39, 40) with the cross-edges of the trays (10).

13. A rack kit as in Claim 12, **characterized in that** over the lower part of their height the edgewalls (36) rest with one side against the outside of the stiffening profile (32, 33, 34) of the cross-edges of the tray (10), whilst at the other side by tongues (39) cranked out of their plane they engage from above into slots (40) which are provided near the edge in the upper face of the tray.

14. A rack kit as in one of the Claims 1 to 13, **characterized** in that at least those built-in longitudinal tiebars (8) and stop-tiebars (9) which lie at the withdrawal side of the rack (1, 2, 3) exhibit an overall height of their profiled rails (27, 28) which exceeds the overall height of the trays (19) (Figures 9 and 16).

## Revendications

1. Etagère à assembler et modifiable, constituée par des cadres latéraux (7) formés par des montants (4), des entretoises de profondeur (5) et des entretoises diagonales (6), par des traverses longitudinales (8) et des traverses de butée (9) reliant les montants (4) de deux cadres latéraux (7) de manière amovible tout en étant rigide et par des fonds de compartiment (10) qui peuvent être placés entre deux cadres latéraux (7) reliés par les traverses longitudinales (8) et/ou traverses de butée (9), les fonds de compartiment (10) pouvant être placés entre deux cadres latéraux (7) assemblés à l'aide de plusieurs traverses longitudinales (8) et/ou traverses de butée (9), soit à l'horizontale ou dans une position transversale inclinée dans un sens, chaque fond de compartiment (10), sur le côté accessible de l'étagère (1, 2, 3), disposant d'une traverse de butée (9) comme élément de support, et deux cadres latéraux (7) formant avec les traverses longitudinales (8) et/ou les traverses de butée (9) ainsi qu'avec les fonds de compartiment (10) un élément de base (2, 3) de l'étagère, caractérisée en ce que la traverse de butée (9) disposée comme élément de support pour le fond du compartiment (10) sur le côté accessible de l'étagère (1, 2, 3) forme simultanément un élément de support ou une butée pour les marchandises se trouvant sur le fond du compartiment (10), en ce que deux éléments de base (2, 3) de l'étagère disposés l'un derrière l'autre sont assemblés l'un à l'autre via le support (11) du fond du compartiment, lesdits supports pouvant être enfoncés simultanément dans les montants (4) immédiatement adjacents de leurs cadres latéraux (7) et en ce que les côtés longitudinaux se faisant face des fonds de compartiment (10) des deux éléments de base (2, 3) de l'étagère reposent en leurs extrémités sur un support (11) de fond de compartiment commun dans un même plan.

2. Etagère à assembler selon la revendication 1, caractérisée en ce que l'ensemble des fonds de compartiment (10) des deux éléments de base (2, 3) de l'étagère sont disposés horizontalement et en ce que les fonds de compartiment (10) sont situés deux à deux l'un derrière l'autre dans un même plan et en ce que les côtés longitudinaux se faisant face de deux fonds de compartiment (10) adjacents reposent exclusivement en leur extrémité sur des supports (11) de fond de compartiment.

3. Etagère à assembler selon la revendication 1, caractérisée en ce que l'ensemble des fonds de compartiment (10) d'un élément de base (2) de l'étagère sont disposés horizontalement alors que l'ensemble des fonds de compartiment (10) de l'autre élément de base (3) de l'étagère ont une position inclinée, en ce qu'un des côtés longitudinaux du fond de compartiment (10) incliné est situé dans un même plan que le côté longitudinal du fond de compartiment (10) horizontal adjacent et en ce que les côtés longitudinaux se faisant face de deux fonds de compartiment (10) adjacents reposent exclusivement en leur extrémité sur des supports (11) de fond de compartiment.

4. Etagère à assembler selon la revendication 1, caractérisée en ce que l'ensemble des fonds de compartiment (10) des deux éléments de base (2, 3) de l'étagère ont une position inclinée, en ce que les fonds de compartiment (10) se raccordent deux à deux dans un même plan, en ce que les côtés longitudinaux se faisant face de deux fonds de compartiment (10) adjacents reposent exclusivement en leur extrémité sur des supports (11) de fond de compartiment et en ce que chaque support (11) de fond de compartiment (10) comporte, au niveau du côté longitudinal inférieur du fond de compartiment (10) le plus élevé un adaptateur de renfort (47).

5. Etagère à assembler selon une quelconque des revendications 1 à 4, caractérisée en ce que les montants (4) des cadres latéraux (7) sont constitués par des profils creux (12) dont la section a une forme de W et qui présentent, au niveau des deux branches extérieures (14a, 14b) du profit en W ainsi qu'au niveau du sommet entre les deux branches intérieures (15a, 15b) du profil en W au moins une série d'encoches (22, 23) réparties régulièrement sur la longueur, alors que les extrémités des entretoises de profondeur (5) qui sont fixées (19a, 19b; 21) sur les branches extérieures du profil pénètrent dans leurs côtés profilés (20), en ce que les encoches (23) au niveau du sommet des branches internes (15a, 15b) du profil en W de chaque montant (4) forment des prises d'assemblage pour des coussinets d'assemblage (24) prévus sur les extrémités des traverses longitudinales (8) et/ou des traverses de butée (9), lesdits coussinets étant adaptés à et entourant chaque fois une branche externe (14a, 14b) et une branche interne (15a, 15b) du profit en W du montant ou de la section du profil creux alors qu'ils peuvent être enfoncés avec des crochets d'assemblage (26) dans les prises d'assemblage (23) et en ce que les encoches (22) sur les branches externes (14a, 14b) du profil en W de chaque montant (4) sont prévues comme prise d'assemblage pour des languettes d'encliquetage (43) situées sur les supports (11) des fonds de compartiment et/ou sur des assembleurs des montants.

6. Etagère à monter selon la revendication 5, caractérisée en ce que tes extrémités libres des deux branches extérieures (14a, 14b) du profit en W des montants (4) sont chaque fois équipées d'une section pliée (18a, 18b) vers l'intérieur, en ce que les brides d'extrémité (19a, 19b) des deux sections pliées (18a, 18b) sont chaque fois situées dans un plan qui est situé environ au milieu entre une branche externe (14a, 14b) et une branche interne (15a, 15b) du profit en W, en ce que la section de l'espace profité (17a, 17b) entre une branche externe (14a, 14b) et une branche interne (15a, 15b) du profil en W ainsi que la section de l'espace profité (16) entre les deux branches internes (15a, 15b) du profit en W présentent une forme trapézoïdale et en ce que les brides d'extrémité (19a, 19b) des deux sections pliées (18a, 18b) sont équipées de prises de fixation (21), par exemple des trous, pour tes entretoises de profondeur (5) et/ou les entretoises diagonales (6) des cadres latéraux (7).

7. Etagère à assembler selon une quelconque des revendications 5 ou 6, caractérisée en ce qu'on peut introduire simultanément les crochets d'assemblage (26) de deux traverses longitudinales (8) ou traverses de butée dirigées en sens opposé dans les encoches (23) prévues au niveau du sommet des branches internes (15a, 15b) du profit en W de chaque montant (4) et en ce que le deuxième groupe de traverses longitudinales (8) et/ou traverses de butée (9) forment, avec un autre cadre latéral (7), une zone d'extension de l'étagère.

8. Etagère selon une quelconque des revendications 1 à 7, caractérisée en ce que les traverses longitudinales (8) et/ou traverses de butée (9) sont constituées par deux rails profilés (27, 28) placés de manière rigide entre deux coussinets d'assemblage (24) qui sont disposés et exécutés de telle manière que l'un forme l'image de l'autre dans un miroir, lesdits rails présentant soit une section en forme de L (fig. 8 et 17) ou d'un J renversé (fig. 9 et 16).

9. Etagère selon une quelconque des revendications 1 à 8, caractérisée en ce que la face inférieure des fonds de compartiment (10), sur leurs côtés longitudinaux et transversaux, sont pourvus de profits de renforcement (29, 39, 32, 33, 34) formés par des bords, en ce que ces profils de renforcement (29, 30) sont constitués, le long des côtés longitudinaux, par plusieurs sections fermées, profilées en forme de tube et disposées parallèlement à une certaine distance (31) l'une de l'autre, dont la zone d'écartement (31) présente une allure étagée et en ce que la zone d'écartement (31) étagée forme une prise de fixation pour les rails profilés (27, 28) des traverses longitudinales (8) et/ou traverses de butée (9) ainsi que pour des dents ou des languettes de fixation (45) prévues sur les supports (11) des fonds de compartiment.

10. Etagère à assembler selon une quelconque des revendications 1 à 9, caractérisée en ce que les supports (11) des fonds de compartiment sont pourvus, en la partie supérieure d'une plaque d'assemblage (42) portant la languette d'encliquetage (43), de deux brides de support (44) coudées et inclinées l'une vers l'autre en forme de toit pour les fonds de compartiment (10), en ce que, à partir des bords d'extrémité de ces brides de support (44), les dents ou les languettes de fixation (45) sont dirigées vers le haut et en ce qu'on a formé, entre la plaque d'assemblage (42) et les brides de support (44), des moulures de stabilisation (46).

11. Etagère à assembler selon une quelconque des revendications 4 à 10, caractérisée en ce que l'adaptateur de renfort (47) peut être fixé et/ou dirigé à l'aide de languettes de fixation (48) sur les brides de support (44) des supports (11) des fonds de compartiment.

12. Etagère selon une quelconque des revendications 1 à 11, caractérisée en ce que des rebords (36) peuvent être assemblés (39, 40) de manière amovible aux bords transversaux des fonds de compartiment (10).

13. Etagère à assembler selon la revendication 12, caractérisée en ce que les rebords (36) sont situés d'une part, sur la partie inférieure (41) de leur hauteur, contre le côté extérieur des profils de renforcement (32, 33, 34) des côtés transversaux du fond de compartiment (10) alors que d'autre part, ils s'agrippent, à l'aide de languettes (39) coudées à partir de leur plan, dans des fentes (40) qui sont prévues près des bords de la face supérieure des fonds de compartiment.

14. Etagère selon une quelconque des revendications 1 à 13, caractérisé en ce que la hauteur des rails profilés (27, 28) d'au moins la traverse longitudinale (8) et/ou traverse de butée (9) située du côté accessible de l'étagère (1, 2, 3) est supérieure à la hauteur du fond de compartiment (10) (fig. 9 et 16).
